# EUROPÄISCHE PATENTSCHRIFT

(11) **EP 0 756 261 B1**
(45) Veröffentlichungstag und Bekanntmachung des Hinweises auf die Patenterteilung: **13.03.2002**
(21) Anmeldenummer: 96202055.8
(22) Anmeldetag: 19.07.1996
(51) Int. Cl.: G08G 1/09

(54) **RDS-TMC-Rundfunkempfänger**
RDS-TMC radio receiver
Récepteur radio RDS-TMC

(30) Priorität: 26.07.1995 DE 19527186
(43) Veröffentlichungstag der Anmeldung: 29.01.1997
(73) Patentinhaber: Siemens Aktiengesellschaft, 80333 München (DE)
(72) Erfinder: Rühl, Hans-Wilhelm, Dr. Ing., c/o Philips, 22335 Hamburg (DE)
(74) Vertreter: Zedlitz, Peter, Dipl.-Inf.

(56) Entgegenhaltungen:
- EP-A- 0 263 253
- EP-A- 0 725 501
- DE-A- 3 536 820
- PATENT ABSTRACTS OF JAPAN vol. 017, no. 104 (E-1328), 3.März 1993 & JP-A-04 292100 (ALPINE ELECTRON INC), 16.Oktober 1992,
- RADIO FERNSEHEN ELEKTRONIK, Bd. 41, Nr. 12, 1.Dezember 1992, Seiten 803-806, XP000368020 SIEGLE G: "VERKEHRSFUNK DIGITAL: TRAFFIC MESSAGE CHANNEL"

## Beschreibung

Die Erfindung bezieht sich auf einen Rundfunkempfänger nach dem Oberbegriff des Anspruchs 1.

Ein solcher Rundfunkempfänger ist aus der Zeitschrift Funkschau 8/92 I Spezial, Seiten 22 bis 26 bekannt. In diesem Rundfunkempfänger werden aus dem empfangenen Rundfunksignal abgeleitete Audiosignale in einer Audioschaltung verarbeitet. Weiter werden aus dem Rundfunksignal RDS- und TMC-Daten abgeleitet. RDS ist die Abkürzung für Radio-Daten-System (radio data system) und TMC für Traffic Message Channel (Verkehrsnachrichtenkanal). TMC stellt eine Funktionserweiterung von RDS dar. RDS-TMC-Daten werden mit dem Rundfunksignal als digital codierte Daten übertragen. Mit TMC wird dem Rundfunkhörer beispielsweise die Möglichkeit gegeben, im Rundfunkgerät gespeicherte Verkehrsmeldungen beliebig häufig vor oder nach Fahrtantritt abzurufen, Verkehrsmeldungen selektiert nach der gewünschten Fahrtstrecke abzuhören und Verkehrsmeldungen unabhängig von der jeweiligen Landessprache in der eigenen Muttersprache ansagen zu lassen. Die RDS-TMC-Daten werden im folgenden auch allgemein als codierte Meldungen bezeichnet. Es ist auch denkbar, nicht nur codierte Verkehrsmeldungen sondern auch Wettermeldungen und andere Nachrichten mit RDS-TMC-Daten oder ähnlichen codierten Daten zu übertragen. Die empfangenen codierten Meldungen werden einer Speicheranordnung zugeführt, die daraufhin Steuerdaten an eine Steuerschaltung gibt. Eine Speicheranordnung enthält einen Datenbestand zur Bildung von Verkehrsnachrichten und kann beispielsweise ein mit der Steuerschaltung verbundener Halbleiterspeicher, ein auf einer Chipkarte angeordneter Halbleiterspeicher, eine CD-ROM usw. sein. Aus dem oben genannten Dokument ist bekannt, daß die Steuerdaten Bezeichnungen einer Sprache in Rechtschrift sind und zur sprachlichen Ausgabe dienen. Unter Rechtschrift ist im folgenden die korrekte Rechtschreibung von Bezeichnungen einer Sprache zu verstehen. Um die Bezeichnungen sprachlich ausgeben zu können, kann die Steuerschaltung z.B. auf einen gespeicherten digital codierten Sprachsignalbestand zurückgreifen.

Aus der DE 35 36 820 A1 ist noch ein Verkehrsfunk-Decoder bekannt, welcher im transparenten Kanal eines RDS-Systems übertragene digitale Signale verarbeitet und parallel zum laufenden Programm zur optischen und akustischen Wiedergabe (auch in Fremdsprachen) bringt. Die Verkehrshinweise sind nach einem Schema standardisiert und im Verkehrsfunk-Decoder gespeichert, so daß lediglich entsprechende digitale Adreßsignale übertragen zu werden brauchen, welche den jeweiligen Verkehrshinweis kennzeichnen. Unter den jeweiligen Adressen lassen sich in einem Verkehrhinweisspeicher innerhalb des Verkehrsfunk-Decoders die Bestandteile eines Verkehrshinweises in beliebiger Form als Schrift für eine optische Anzeige oder auch als Sprache - auch in Fremdsprache - ablegen.

Ferner ist noch aus der EP 0 725 501 A1 ein Rundfunkempfänger bekannt, der Bestandteile eines Verkehrshinweises von einer Chipkarte liest.

Der Erfindung liegt die Aufgabe zugrunde, einen Rundfunkempfänger zu schaffen, der einen verminderten Datenbestand aufweist.

Die Aufgabe wird durch einen Rundfunkempfänger der eingangs genannten Art gemäß dem Kennzeichen des Anspruchs 1 gelöst.

Dem erfindungsgemäßen Rundfunkempfänger werden von einer Speicheranordnung Steuerdaten geliefert, die unter einer codierten Meldung abgelegt sind. Eine solche Speicheranordnung kann z.B. eine im Rundfunkempfänger angeordnete interne Speicheranordnung (z.B. Halbleiterspeicher) und/oder eine externe Speicheranordnung sein (z.B. ein auf einer Chipkarte angeordneter Halbleiterspeicher). Die Steuerdaten enthalten Schreibungen mehrerer Sprachen. Eine solche Schreibung kann z.B. eine Rechtschrift (z.B. Röthenbach an der Pegnitz), eine Lautschrift oder eine auf einer Anzeigevorrichtung darstellbare Schrift (z.B. Röthenb./Peg.) für mehrere Sprachen sein. Um den Datenbestand gering zu halten, sind die Schreibungen einer ersten Sprache komplett und von den weiteren Sprachen nur dann Schreibungen in den Steuerdaten enthalten, wenn diese von der ersten Sprache abweichen. Ist die erste Sprache beispielsweise die deutsche Sprache und weitere Sprachen englisch, französisch und niederländisch so lauten z.B die Einträge in Rechtschrift für den Ort "Köln" in der ersten Sprache (deutsch) "Köln", der zweiten Sprache (englisch) "Cologne", der dritten Sprache (französisch) "Cologne" und der vierten Sprache (niederländisch) "Keulen". Für den Ort "Lauf" gibt es nur ein Eintrag in Rechtschrift für die erste Sprache (deutsch), da für diesen Ort keine unterschiedliche Rechtschrift in der englischen, der französischen oder niederländischen Sprache existiert. Um die Schreibungen der verschiedenen weiteren Sprachen zu unterscheiden, enthalten diese jeweils ein einleitendes Trennzeichen und weisen ebenso wie die Schreibungen der ersten Sprache eine vorgegebene Länge (vorgegebene Stringlänge) auf.

Um den Datenbestand weiter zu vermindern, ist wenigstens eine Speicheranordnung zur Speicherung bestimmter Steuerdaten unter jeweils einem Ersetzungscode vorgesehen. Die in wenigstens einer Speicheranordnung unter einem Ersetzungscode abgelegten Steuerdaten enthalten mindestens eine Schreibung einer ersten Sprache und dann bestimmte Schreibungen von vorgegebenen weiteren Sprachen, wenn diese von der ersten Sprache abweichen. Die Schreibungen aller weiteren Sprache werden jeweils durch ein Trennzeichen eingeleitet. Die Steuerschaltung ist nach Empfang von Steuerdaten, die wenigstens einen Ersetzungscode enthalten, zur Zuführung wenigstens eines Ersetzungscodes an eine Speicheranordnung und zum Empfang von den unter dem Ersetzungscode abgelegten Steuerdaten vorgesehen.

In einer oder mehreren Speicheranordnungen sind Steuerdaten abgelegt, die einem Ersetzungscode zugeordnet sind. Solch einem Ersetzungscode zugeordnete Steuerdaten enthalten häufig verwendete Bezeichnungen, wie z.B. "Köln", "Anschlußstelle" usw. Erhält die Steuerschaltung zu einer codierten Meldung entsprechende Steuerdaten von der Speicheranordnung, die wenigstens einen Ersetzungscode enthalten, so kann erst dann die entsprechende Meldung (z.B. Verkehrsnachricht) für eine Sprachsyntheseschaltung und/oder eine Anzeigevorrichtung gebildet werden, wenn die unter einem Ersetzungscode abgelegten Steuerdaten der Steuerschaltung zugeführt worden sind. Da solche Ersetzungscodes weniger Speicherplatz als die Steuerdaten benötigen, wird daher der Datenbestand vermindert. Dies ist insbesondere dann vorteilhaft, wenn der Rundfunkempfänger zur Verkehrsmeldung verwendet wird und Daten eines großen Verkehrsraumes (z.B. Deutschland) in einer Speicheranordnung abgelegt sind. Ein weiterer Vorteil der Erfindung ist, daß durch geeignete Auswahl von unter einem Ersetzungscode abgelegten Steuerdaten eine Minimierung von möglichen Fehlern, die beim Aufbau des Datenbestandes entstehen könnten und auf der Anzeigevorrichtung und/oder der Sprachsyntheseschaltung sichtbar bzw. hörbar werden, gewährleistet ist. Unter einer geeigneten Auswahl von unter einem Ersetzungscode abgelegten Steuerdaten wird eine Auswahl von Wortfolgen, Wörtern und Wortteilen (Bezeichnungen) nach sprachwissenschaftlichen Gesichtspunkten verstanden.

Es ist möglich, daß die Steuerschaltung mehrfach zur Bildung der Meldung für die Anzeigevorrichtung und/oder Spachsyntheseschaltung auf wenigstens eine Speicheranordnung zugreifen muß, um unter Ersetzungscodes abgespeicherte Steuerdaten zu lesen. Dies kann an zwei Beispielen erläutert werden. Für die Bezeichnung "Anschlußstelle Köln-Mühlheim" kann in einer Speicheranordnung "12365-Mühlheim" oder "78654 43263-Mühlheim" als Steuerdaten stehen. In dem ersten Fall liest die Steuerschaltung z.B. die Steuerdaten "32987 Köln" für den Ersetzungscode "12365". Danach müssen noch die Steuerdaten (hier: "Anschlußstelle") für den Ersetzungscode "32987" gelesen werden um die Bezeichnung zusammensetzen zu können. In dem zweiten Fall entnimmt die Steuerschaltung die Bezeichnungen "Anschlußstelle" und "Köln" unter den Ersetzungscodes "78654" und "42263" aus wenigstens einer Speicheranordnung.

In einer Weiterbildung der Erfindung ist vorgesehen, daß die Schreibungen weiterer Sprachen ein erstes einleitendes Trennzeichen enthalten, wenn diese in einer Standardreihenfolge abgelegt sind, und sonst ein zweites einleitendes Trennzeichen und ein darauffolgendes die Sprache kennzeichnendes Zeichen.

Sind die Schreibungen der weiteren Sprachen in einer vorgegebenen Reihenfolge (Standardreihenfolge) abgelegt, werden diese jeweils mit einem ersten Trennzeichen eingeleitet. Ist die Standardreihenfolge nach der deutschen Sprache beispielsweise englisch, französisch und niederländisch, wird das erste Trennzeichen verwendet. Die Standardreihenfolge ist auch dann gegeben, wenn Einträge der niederländischen Sprache und auch der französischen Sprache weggelassen werden, z.B. weil sich nur die englische Schreibung von der deutschen unterscheidet. Die Standardreihenfolge liegt dann nicht mehr vor, wenn wenigstens eine k-te Schreibung von n Schreibungen (n > k) nicht aufgeführt ist. Das liegt dann vor, wenn beispielsweise nach dem deutschen Eintrag der französische und der niederländische Eintrag folgt und somit der englische Eintrag fehlt. Eine solche Reihenfolge läge dann vor, wenn es nur einen von der deutschen Sprache unterscheidbaren Eintrag in französisch und niederländisch gäbe. Bei diesem Beispiel werden die Schreibungen der weiteren Sprachen (französisch, niederländisch) mit einem zweiten Trennzeichen und einem darauffolgenden die Sprache kennzeichnenden Zeichen eingeleitet. Hierdurch läßt sich eine weitere Datenreduktion erreichen.

In einer Fortbildung der Erfindung ist vorgesehen, daß die in wenigstens einer Speicheranordnung unter jeweils einer codierten Meldung oder einem Ersetzungscode abgelegten Steuerdaten die ableitbare Recht- und/oder Lautschrift von wenigstens einer ersten Sprache und nur dann die ableitbare Recht- und/oder Lautschrift wenigstens einer weiteren Sprache enthalten, wenn Recht- und/oder Lautschrift der weiteren Sprache von der ersten Sprache abweichen.

Wenigstens eine Speicheranordnung enthält Speicherbereichen zugeordnete Listen mit jeweils einer codierten Meldung zugeordneten spezifischen Steuerdaten und eine Ersetzungsliste mit den Ersetzungscodes und den jeweils zugeordneten Steuerdaten. Solche Listen können eine Ortsliste, eine Bereichsliste, eine Abschnittsliste, eine Standardphrasenliste usw. sein. In der Ortsliste sind Ortsangaben (z.B. Städte), in der Bereichsliste sind verkehrstechnische Bereiche (z.B. Ruhrgebiet), Verwaltungsbereiche (z.B. Mittelfranken) oder touristische Bereiche (z.B. Teutoburger Wald), in der Abschnittsliste sind Straßenabschnitte und in der Standardphrasenliste Teile einer Verkehrsmeldung (z.B. 10 km Stau) enthalten. Die Orts-, Bereichs- und Abschnittsliste ist regionalspezifisch, während die Standardphrasenliste ereignisspezifisch ausgelegt ist.

Die Steuerschaltung ist zur Zuführung regionalspezifischer Steuerdaten von einer ersten Speicheranordnung und ereignisspezifischer Steuerdaten von einer zweiten Speicheranordnung vorgesehen. Hierbei kann die erste Speicheranordnung eine Ersetzungsliste mit regionalspezifischen und die zweite Steueranordnung Steuerdaten mit ereignisspezifischen Steuerdaten enthalten.

Die erste Speicheranordnung könnte Bestandteil einer Chipkarte sein, die zur Aufnahme in eine Kartenlesevorrichtung vorgesehen ist. Der Aufbau solcher Chipkarten und deren Funktionsweise wird beispielsweise in den Dokumenten US-5 001 753, US-5 146 499, US-5 163 154 und US-5 168 521 beschrieben. Der Vorteil solcher Chipkarten ist, daß diese bei Verwendung in einem Rundfunkempfänger zur Decodierung von Verkehrsmeldungen für ein bestimmtes Gebiet vorgesehen sind und somit bei einer Orts- bzw. Gebietsveränderung leicht auszutauschen sind.

Die Erfindung bezieht sich auch auf ein Modul zur Verarbeitung von aus einem Rundfunksignal abgeleiteten codierten Meldungen mit einer Steuerschaltung, die
- zur Lieferung von aus dem Rundfunksignal abgeleiteten codierten Meldungen an wenigstens eine Speicheranordnung,
- zum Empfang von aus den codierten Meldungen abgeleiteten Steuerdaten wenigstens einer Speicheranordnung und
- zur Bildung der Meldungen aus den Steuerdaten in einer für eine Anzeigevorrichtung und/oder eine Sprachsyntheseschaltung geeigneten Form vorgesehen ist.
Die in wenigstens einer Speicheranordnung unter einer codierten Meldung abgelegten Steuerdaten enthalten mindestens eine Schreibung einer ersten Sprache und dann bestimmte Schreibungen von vorgegebenen weiteren Sprachen, wenn diese von der ersten Sprache abweichen. Die Schreibungen aller weiteren Sprache weisen jeweils ein einleitendes Trennzeichen auf.

Ferner bezieht sich die Erfindung auf eine Speicheranordnung für einen Rundfunkempfänger oder für ein Modul zur Verarbeitung von aus einem Rundfunksignal abgeleiteten codierten Meldungen zur Speicherung von Steuerdaten zu jeweils einer codierten Meldung. Die Speicheranordnung enthält unter einer codierten Meldung abgelegte Steuerdaten mindestens eine Schreibung einer ersten Sprache und dann bestimmte Schreibungen von vorgegebenen weiteren Sprachen, wenn diese von der ersten Sprache abweichen. Die Schreibungen aller weiteren Sprache weisen jeweils ein einleitendes Trennzeichen auf. Eine solche Speicheranordnung kann Bestandteil einer Chipkarte sein, auf die sich die Erfindung somit ebenfalls bezieht.

Ausführungsbeispiele der Erfindung werden nachstehend anhand der Figuren erläutert. Es zeigen:
- Fig. 1: ein erstes Ausführungsbeispiel eines RDS-TMC-Rundfunkempfängers,
- Fig. 2: den Aufbau einer in dem RDS-TMC-Rundfunkempfänger nach Fig. 1 zu verwendenden Chipkarte,
- Fig. 3: die logische Struktur von auf einer Chipkarte abgelegten Daten zur Verwendung beispielsweise in dem RDS-TMC-Rundfunkempfänger nach Fig. 1 und
- Fig. 4: ein zweites Ausführungsbeispiel eines RDS-TMC-Rundfunkempfängers mit einem mit dem RDS-TMC-Rundfunkempfänger gekoppelten Modul zur Verarbeitung von RDS-TMC-Daten.

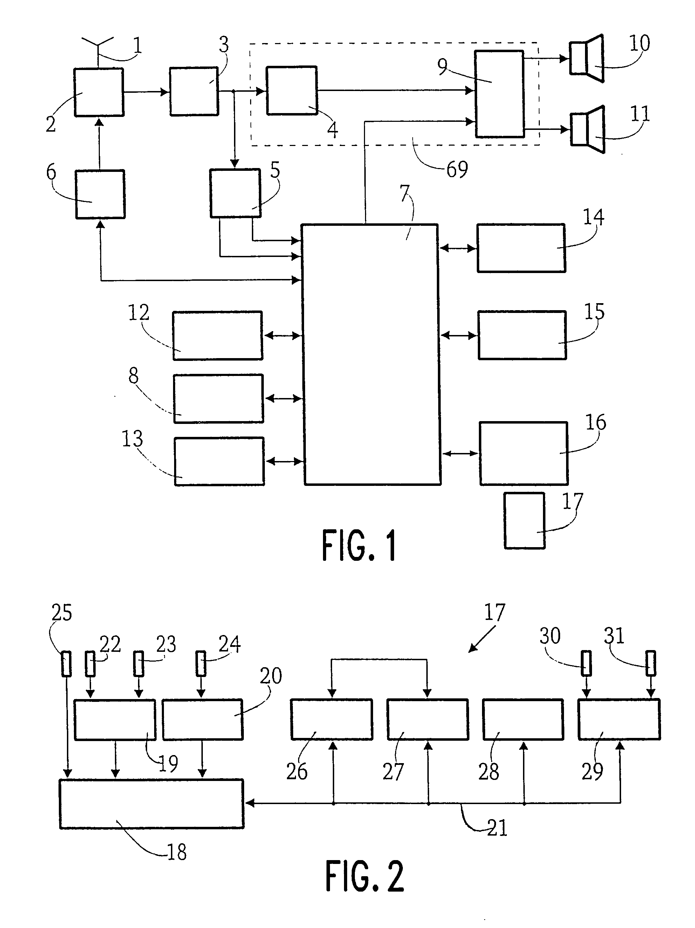

In Fig. 1 ist ein Rundfunkempfänger zur Verarbeitung von Rundfunksignalen und zur Decodierung und Weiterverarbeitung von RDS-TMC-Daten dargestellt. RDS bedeutet Radio-Daten-System und liefert dem Rundfunkhörer beispielsweise Verkehrsmeldungen, Daten über alternative Frequenzen des eingestellten Senders usw. TMC ist die Abkürzung für Traffic Message Channel und stellt eine Funktionserweiterung von RDS dar. RDS-TMC-Daten, die codierte Meldungen darstellen, werden mit dem Rundfunksignal als digital codierte Daten übertragen. Mit TMC wird dem Rundfunkhörer beispielsweise die Möglichkeit gegeben im Rundfunkgerät gespeicherte Verkehrsmeldungen beliebig häufig vor oder nach Fahrtantritt abzurufen, die Verkehrsmeldungen selektiert nach der gewünschten Fahrtstrecke abzuhören und die Verkehrsmeldungen unabhängig von der jeweiligen Landessprache in der eigenen Muttersprache ansagen zu lassen.

Das von einer Antenne 1 des RDS-TMC-Rundfunkempfängers (Fig. 1) empfangene Rundfunksignal wird über einen Tuner 2 und eine Zwischenfrequenzstufe 3 zu einem Stereodecoder 4 und RDS-Decoder 5 übertragen. Der Tuner 2 wird von einer Abstimmschaltung 6 gesteuert, die von einer Steuerschaltung 7 und einer daran angeschlossenen Bedienungsanordnung 8 eingestellt wird. Der Stereodecoder 4 liefert niederfrequente Stereosignale, die über einen Audioverstärker 9 zwei Lautsprechern 10 und 11 zugeführt werden. Der Stereodecoder 4 und der Audioverstärker 9 bilden eine Audioschaltung 69. Der RDS-Decoder 5 entnimmt aus dem von der Zwischenfrequenzstufe 3 gelieferten niederfrequenten Signal RDS-TMC-Daten. Die RDS-TMC-Daten und ferner ein Taktsignal werden vom RDS-Decoder 5 zur Steuerschaltung 7 gegeben.

Mit der Steuerschaltung 7 sind noch ein Speicher 12, eine Anzeigevorrichtung 13, eine Sprachsyntheseschaltung 14 und gegebenenfalls eine oder mehrere weitere Anordnungen 15, beispielsweise ein Cassettenlaufwerk, ein CD-Laufwerk, ein Autotelefon usw., gekoppelt. Der Speicher 12 stellt eine zweite Speicheranordnung dar. Des weiteren ist eine Kartenlesevorrichtung 16 an die Steuerschaltung 7 angeschlossen, die Daten mit einer Chipkarte 17 zur Weiterverarbeitung austauscht.

Der Aufbau einer solchen Chipkarte 17 ist in der Fig. 2 als Blockschaltbild dargestellt. Das Kernelement der Chipkarte 17 ist ein Prozessor 18, der mit einer Stromversorgungsschaltung 19, einer Taktverarbeitungsschaltung 20 und einem Bus 21 gekoppelt ist. Die Stromversorgungsschaltung 19 ist mit zwei Anschlüssen 22 und 23 verbunden, über welche die Stromversorgung von der Kartenlesevorrichtung 16 zur Chipkarte 17 hergestellt wird. Weiter erhält die Taktverarbeitungsschaltung 20 über einen Anschluß 24 ein Taktsignal von der Kartenlesevorrichtung 16. In der Taktverarbeitungsschaltung 20 können aus dem Taktsignal weitere Taktsignale abgeleitet werden. Mit dem Prozessor 18 ist ein weiterer Anschluß 25 verbunden, über den ein Reset-Signal von der Kartenlesevorrichtung 16 geliefert werden kann. Mit dem Bus 21 ist ein Lese-Schreib-Speicher 26 (im folgenden als RAM bezeichnet), ein Festwertspeicher 27 (im folgenden als Programm-ROM bezeichnet), ein Festwertspeicher 28 (im folgenden als Daten-ROM bezeichnet) und eine Schnittstelleneinheit 29 gekoppelt. Über die Schnittstelleneinheit 29 und zwei daran angeschlossene Anschlüsse 30 und 31 werden Daten zwischen der Kartenlesevorrichtung 16 und der Chipkarte 17 ausgetauscht. Das Programm-ROM 27 enhält das für den Betrieb des Prozessors 18 erforderliche Programm, das RAM 26 enthält Daten, die während des Betriebs auftreten und veränderbar sind und das Daten-ROM 28 enthält die TMC-Daten. Zumindest der Daten-ROM 28 ist ein Teil einer ersten Speicheranordnung.

Die Steuerschaltung 7 in der Fig. 1 liefert einen Teil der empfangenen TMC-Daten, die jeweils codierte Meldungen darstellen, über die Kartenlesevorrichtung 16 zur Chipkarte 17. Von der Chipkarte 17 werden aufgrund dieser empfangenen Daten daraus abgeleitete Daten zurück zur Steuerschaltung 7 geführt, die diese mit weiteren aus dem Speicher 12 abgeleiteten TMC-Daten in Steuerdaten für die Sprachsyntheseschaltung 14 und/oder für die Anzeigevorrichtung 13 umsetzt. Die Sprachsyntheseschaltung 14 gibt nach Empfang der Steuerdaten synthetisierte Sprache über die Steuerschaltung 7 zum Audioverstärker 9. Die Steuerschaltung 7 wird dabei gleichzeitig die Eingänge im Audioverstärker 9 so schalten, daß statt des Stereosignals vom Stereodecoder 4 eine synthetisiertes Sprachsignal von der Sprachsyntheseschaltung 14 über die Steuerschaltung 7 und den Audioverstärker 9 zu den Lautsprechern 10 und 11 gelangt. Die Anzeigevorrichtung 13 erhält von der Steuerschaltung 7 Steuerdaten, die eine Meldung in Rechtschrift darstellen.

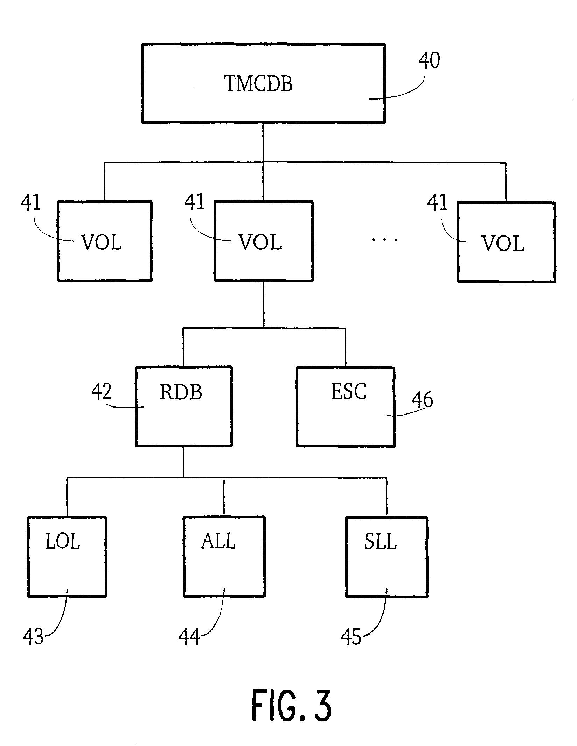

Die TMC-Daten enthalten also codierte Verkehrsmeldungen, die mit Hilfe der Chipkarte 17, dem Speicher 12 und der Steuerschaltung 7 decodiert und in synthetisierte Sprache und in eine Anzeigeform für die Anzeigevorrichtung 13 umgesetzt werden. Im Daten-ROM 28 ist eine TMC-Datenbank 40 (TMCDB) gespeichert, deren logischer Aufbau anhand der Fig. 3 erläutert wird und die als Binärdatei abgelegt ist.

Die TMC-Datenbank 40 (TMCDB) enthält eine Verzeichnisstruktur, in deren Hauptverzeichnis unter anderem globale Daten (global data), geografische Meldungen (GMS-Meldungen; GMS = Geographic Message Selection) und eine Datenbereichsliste (database volume list) abgelegt sind.

Zu den globalen Daten gehört eine Identifikationsnummer der TMC-Datenbank 40 und Koordinaten- und Skalierungsmeldungen. In der TMC-Datenbank 40 sind gegenüber den Koordinaten des geodätischen Koordinatensystems unterschiedliche Koordinaten eines neuen Koordinatensystem abgelegt. Mittels der Skalierungsmeldungen können die Koordinaten des neuen, gespeicherten Koordinatensystems in die Koordinaten des geodätischen Koordinatensystems umgerechnet werden.

Die geografischen Meldungen enthalten Daten über Sender des betreffenden regionalen Gebietes. Zu den Angaben über einen Sender gehört ein Frequenzbestimmungsfaktor (PI-Code = Programmidentifikations-Code), mit dem die Sendefrequenz bestimmbar ist und Koordinaten für den Standort des Senders und dessen Empfangsbereich.

Mit Hilfe des Frequenzbestimmungsfaktors (frequency offset) wird die Trägerfrequenz der vom Tuner 2 empfangenen Rundfunksignale mit RDS-TMC-Signalanteilen abgestimmt. Eine Trägerfrequenz wird beispielsweise durch Multiplikation des Frequenzbestimmungsfaktors mit der Frequenzeinheit 0,1 Mhz und Addition des Startfrequenzwertes 87,6 Mhz ermittelt. Ein Frequenzbestimmungsfaktor von 0 bedeutet beispielsweise eine Trägerfrequenz von 87,6 Mhz und von 203 eine Trägerfrequenz von 107,9 Mhz. Diese Berechnung kann im Prozessor 18 der Chipkarte 17 oder in der Steuerschaltung 7 des Rundfunkempfängers durchgeführt werden. Anhand der ermittelten Frequenz stimmt die Abstimmschaltung 6 den Tuner 2 ab.

Die Datenbereichsliste verweist auf wenigstens ein Unterverzeichnis 41 (VOL), in dem Identifizierungsdaten, Daten einer regionalen Datenbankeinheit 42 (RDB) und eine Ersetzungsliste (escape table) 46 (ESC) gespeichert sind. Die Identifizierungsdaten bestehen aus einem EBU-Code (EBU = European Broadcasting Union) und einer codierten Nummer (database number). Der EBU-Code bezeichnet den Staat, für den Meldungen in der regionalen Datenbankeinheit 42 abgelegt sind. Die codierte Nummer dient zur Adressierung der regionalen Datenbankeinheit 42, die Daten für eine oder mehrere Regionen enthält, in denen die Chipkarte 17 zur Anwendung kommen soll. Eine Region ist ein bestimmtes Gebiet, das Teile eines Staates, einen Staat oder auch mehrere Staaten ganz oder teilweise umfaßt.

Eine regionale Datenbankeinheit 42 enthält eine Ortsliste (location list) 43 (LOL), eine Bereichsliste (area location list) 44 (ALL) und eine Abschnittsliste (segment location list) 45 (SLL). Die Listen sind jeweils in einem oder mehreren Speicherbereichen untergebracht. In der Ortsliste 43 sind Ortsangaben, z.B. Städte, Autobahnabfahrten, Fähranleger, enthalten. Die Bereichsliste 44 gibt verkehrstechnische Bereiche (z.B. Ruhrgebiet), Verwaltungsbereiche (z.B. Mittelfranken) oder touristische Bereiche (z.B. Teutoburger Wald) an. In der Abschnittsliste 45 sind Straßenabschnitte enthalten.

Die Ersetzungsliste (escape table) 46 (ESC) ist auch in einem oder mehreren Speicherbereichen untergebracht. Die Ersetzungsliste 46 dient zur Komprimierung von Orts- und Bereichsnamen (regionalspezifisch). In dieser Liste 46 werden Bezeichnungen und Namensbestandteile abgespeichert, die wiederholt in der Ortsliste 43, der Bereichsliste 44 und der Abschnittsliste 45 auftreten. Beispielsweise sind in der Ortsliste außer dem Ort "Köln" auch verschiedene Stadtteile, wie Köln-Dellbrück, Köln-Kalk, Köln-Porz usw. eingetragen. Um die Ortsliste zu verkleinern ist für den Ort "Köln" ein Ersetzungszeichen in der Ortsliste enthalten, das in der Ersetzungsliste 46 genau spezifiziert ist. Die Ersetzungsliste 46 enthält jeweils für eine Bezeichnung oder einen Namensbestandteil ein Ersetzungszeichen, das eine Adresse (z.B. 2429) in der Ersetzungsliste 46 darstellt, und die zu ersetzende Bezeichnung oder den zu ersetzenden Namensbestandteil in Rechtschrift und Lautschrift. Im folgenden sind Beispiele von Einträgen einer möglichen Ersetzungsliste 46 aufgeführt:

| EC | RS | LS |
|---|---|---|
| 2209 | Passau | "pas$aU |
| 2367 | Dortmund | "dORt$mUnt |
| 2388 | Euskirchen | "?OYs"kIR$C@n |
| 2418 | Oberhausen | "?:$b=6$haU$z@n |
| 2429 | Köln | "k9ln |
| 2438 | Olpe | "?Ol$p@ |
| 2444 | Rade | "Ra:$d@ |
| 2509 | A1 | \(A1) |
| 2511 | A3 | \(A3) |

In dem obigen Auszug einer Ersetzungliste 46 repräsentiert beispielsweise das Ersetzungszeichen 2438 den Ortsnamen "Olpe" in Rechtschrift und Lautschrift ("?Ol$p@). In der 1. Spalte ist also der Ersetzungscode (EC), in der 2. Spalte eine Bezeichnung in Rechtschrift (RS) und in der 3. Spalte eine Bezeichnung in Lautschrift (LS) abgelegt. Als Lautschrift wird SAMPA (SAMPA = speech assessment methods phonetic alphabet) verwendet. Häufig verwendete Namensbestandteile (z.B. Anschlußstelle, Autobahnkreuz usw.), die nicht regionalspezifisch sondern verkehrsspezifisch sind, können anstatt in der Ersetzungsliste 46 in einer zusätzlichen Ersetzungsliste in dem Speicher 12 des RDS-TMC-Rundfunkempfängers gespeichert sein. Eine solche mögliche zusätzliche Ersetzungsliste könnte folgende Einträge enthalten:

| EC | RS | LS |
|---|---|---|
| 0012 | westliches | "vEst$llC$@s |
| 0018 | Autobahnkreuz | "?aU$to$ba:n$kROYts |
| 0019 | Anschlußstelle | "?an$SlUs$StEl$@ |
| 0022 | Raststätte | "Rast$StE$t@ |

Beispielsweise repräsentiert der Ersetzungscode 0019 in der oben aufgeführten zusätzlichen Ersetzungliste den Namensbestandteil "Anschlußstelle" in Rechtschrift und Lautschrift ("?an$SlUs$StEl$@). Dieser Auschnitt einer Ersetzungsliste weist in der 1. Spalte einen Ersetzungscode (EC), in der 2. Spalte eine Bezeichnung in Rechtschrift (RS) und in der 3. Spalte eine Bezeichnung in Lautschrift (LS) auf.

Die Ortsliste 43 enthält für jeden Ort einen Ortscode (z.B. 3038) und den Ortsnamen (z.B. Nordrhein Westfalen, Köln) in Rechtschrift und in Lautschrift. Der Ortscode ist eine codierte Meldung und dient zur Adressierung der jeweiligen Ortsnamen. Im folgenden sind fünf Beispiele aus der Ortsliste aufgeführt:

| OC | RS | LS | Bedeutung |
|---|---|---|---|
| 3038 | 0018 2438 | ○ ○ | (Autobahnkreuz Olpe) |
| 3109 | Lauf | "laUf | (Lauf) |
| 3621 | 0019 Kusel | ○ ku:$z@l | (Anschlußstelle Kusel) |
| 3783 | 0019 2429-Dellbrück | ○ ○ "dEl$bRYk | (Anschlußstelle Köln-Dellbrück) |
| 3796 | 0019 2429-Mühlheim | ○ ○ "my:l$halm | (Anschlußstelle Köln-Mühlheim) |

Die obige mögliche Ortsliste enthält in der ersten Spalte den Ortscode (OC), in der zweiten Spalte den Ortsnamen in Rechtschrift (RS) oder ganz oder teilweise in codierter Form als Ersetzungscode und die dritte Spalte den Ortsnamen in Lautschrift (LS) oder ganz oder teilweise in codierter Form als Platzhalter, der jeweils auf einen Ersetzungscode in der zweiten Spalte der Ortsliste verweist. Die oben gezeigte vierte Spalte ist nicht in der Ortsliste vorhanden und soll nur zeigen, was die einzelnen Ersetzungscodes in der Ortsliste bedeuten. Soll beispielsweise der Eintrag unter dem Ortscode "3038" in Rechtschrift und Lautschrift von der Chipkarte 17 gelesen werden, so empfängt die Steuerschaltung 7 die Zeichenfolge "0018 2438" und "○ ○". Die Zeichen "0018" und "2438" stellen Ersetzungscodes in einer Ersetzungsliste dar. Unter dem Ersetzungscode "0018" sei beispielsweise "Autobahnkreuz" in der oben genannten zusätzlichen Ersetzungsliste und unter dem Ersetzungscode "2438" sei "Olpe" eingetragen. Ein Platzhalter "○" gibt an, das die entsprechende Lautschrift unter dem Eintrag "0018" bzw. "2438" einer Ersetzungsliste gelesen werden soll. In der Steuerschaltung 7 wird dann der unter der Adresse "2438" gesuchte Ortsname in Rechtschrift (Autobahnkreuz Olpe) und Lautschrift ("?aU$to$ba:n$kROYts "?Ol$p@) zusammengesetzt.

Die bisher beschriebenen Listen enthalten unter einem Orts- oder Ersetzungscode einen Eintrag in Recht- und Lautschrift. Die Einträge in Recht- und Lautschrift werden, wie oben erwähnt, als Steuerdaten bezeichnet. Der Eintrag in Rechtschrift in der Ortsliste soll im folgenden als eine erste Hauptkomponente und der Eintrag in Lautschrift in der Ortsliste als eine erste Nebenkomponente der Steuerdaten verstanden werden. Als eine zweite Hauptkomponente wird der Eintrag in Rechtschrift in der Ersetzungliste und als eine zweite Nebenkomponente der Eintrag in Lautschrift in der Ersetzungsliste verstanden.

In der Bereichsliste 44 sind für jeweils einen Bereich ein Bereichscode (z.B. 4803), ein Bereichsname in Rechtschrift (z.B. Westliches Ruhrgebiet) und ein Bereichsname in Lautschrift ("vEst$llC$@s "Ru:6$g@%bi:t) eingetragen. Der Bereichscode dient zur Adressierung der jeweiligen Bereichsnamen. Im folgenden sind vier Beispiele aus einer möglichen Bereichsliste aufgeführt:

| BC | RS | LS | Bedeutung |
|---|---|---|---|
| 4803 | 0012 Ruhrgebiet | ○ "Ru:6$g@%bi:t | (Westliches Ruhrgebiet) |
| 4991 | Bayerischer Wald | "baI$RIS$=6_"valt | (Bayerischer Wald |
| 4994 | Bodensee | "bo:$d@n$ze: | (Bodensee) |
| 4996 | Eifel | "?aI$f@l | (Eifel) |

Der oben aufgeführte Ausschnitt aus einer möglichen Bereichsliste enthält in der ersten Spalte den Bereichscode (BC), in der zweiten Spalte den Bereichsnamen in Rechtschrift (RS) oder ganz oder teilweise in codierter Form als Ersetzungscode und in der dritten Spalte den Bereichsnamen in Lautschrift (LS) oder ganz oder teilweise in codierter Form als Platzhalter. Die vierte Spalte ist nicht in der Bereichsliste vorhanden und soll zeigen, was die einzelnen Ersetzungscodes in der Bereichsliste bedeuten. So bedeutet beispielsweise der Eintrag "0012 Ruhrgebiet" in der zweiten Spalte (Rechtschrift) unter dem Bereichscode 4803 "Westliches Ruhrgebiet", da der Ersetzungscode "0012" den Namensbestandteil "Westliches" angibt. Der Platzhalter (○) verweist auf den Lautschrifteintrag ("vEst$11C$@s) unter der Adresse "0012". Der Eintrag in Rechtschrift in der Bereichsliste bildet auch eine erste Hauptkomponente und der Eintrag in Lautschrift eine erste Nebenkomponente.

Hierbei werden folgende Steuervorgänge in der Steuerschaltung 7 durchgeführt. Wenn die Steuerschaltung 7 beispielsweise die codierte Meldung "4803" empfangen hat, wird diese codierte Meldung als Adresse oder Ortscode dem Daten-ROM 28 auf der Chipkarte 17 zugeführt. Die Einträge in Rechtschrift (0012 Ruhrgebiet) und in Lautschrift (○ "Ru:6$g@%bi:t) werden der Steuerschaltung 7 von der Chipkarte 17 geliefert. Die Steuerschaltung 7 detektiert den Ersetzungscode (0012) und liest die unter diesem Ersetzungscode eingetragene Rechtschrift und Lautschrift in dem Speicher 12. Hierbei kann die Steuerschaltung 7 beispielsweise anhand der ersten Ziffer unterscheiden, ob sie von der Ersetzungsliste in dem Speicher 12 oder der Ersetzungsliste 46 in dem Daten-ROM 28 lesen muß. Der Eintrag in Rechtschrift "Westliches" wird mit dem zuvor gelesenen Eintrag "Ruhrgebiet" kombiniert. Auf ähnliche Weise wird mit den Einträgen in Lautschrift verfahren. Soll nur die Lautschrift zusammengesetzt werden und zur Sprachsyntheseschaltung 14 gegeben werden, wird folgendermaßen verfahren. Die Steuerschaltung erkennt den Platzhalter "○" in der Lautschrift (○ "Ru:6$g@%bi:t) und liest daher in der Bereichsliste den zugehörigen Ersetzungscode (0012) in der Rechtschrift. Danach liest sie den unter diesem Ersetzungscode gespeicherten Eintrag der Lautschrift in der Ersetzungsliste des Speichers 12. Anschließend werden wie oben schon erläutert die Lautschriften kombiniert.

In der Abschnittsliste 45 sind jeweils Straßenabschnitte in Rechtschrift und Lautschrift und ein Abschnittscode enthalten, welcher einer codierten Meldung entspricht und zur Adressierung des betreffenden Straßenabschnittes vorgesehen ist. Drei Beispiele aus einer möglichen Abschnittsliste sind nachstehend aufgeführt:

| AC | RS1 | LS1 | RS2 | LS2 | RS3 | LS3 | Bedeutung |
|---|---|---|---|---|---|---|---|
| 5024 | 2511 | ○ | 2429 | ○ | 2418 | ○ | (A3, Köln, Oberhausen) |
| 5108 | 2509 | ○ | 2367 | ○ | 2388 | ○ | (A1, Dortmund, Euskirchen) |
| 5130 | 2511 | ○ | 2209 | ○ | Linz | "lInts | (A3, Passau, Linz) |

In der ersten Spalte der Abschnittsliste 45 ist der Abschnittscode (AC) eingetragen. Die zweite Spalte enthält die Straßenbezeichnung in Rechtschrift (RS1) oder einen Ersetzungscode, der auf die Straßenbezeichnung in Rechtschrift in der Ersetzungsliste 46 (z.B. 2511) verweist. In der dritten Spalte ist in Lautschrift (LS1) die Straßenbezeichnung oder ein Platzhalter eingetragen, der die entsprechende Eintragung der Straßenbezeichnung in Lautschrift in der Ersetzungsliste angibt. Die Knotenpunkte der Straßenabschnitte, die jeweils Anfang und Ende des betreffenden Straßenabschnitts darstellen, sind in Rechtschrift (z.B. Linz) oder ganz oder teilweise in codierter Form als Ersetzungscode (z.B. 2209) in der vierten und sechsten Spalte (RS2, RS3) dargestellt. In der fünften und siebten Spalte sind die Knotenpunkte in Lautschrift oder ganz oder teilweise in codierter Form als Platzhalter aufgeführt (LS2, LS3) . Die siebte Spalte ist kein Bestandteil der Abschnittsliste, sondern dient zum Verständnis, was die einzelnen Ersetzungscodes bedeuten (z.B. Autobahn A3, Knotenpunkte Passau und Linz). In dieser Abschnittsliste sind insgesamt drei erste Hauptkomponenten (RS1, RS2, RS3) und drei erste Nebenkomponenten (LS1, LS2, LS3) der unter jeweils einem Abschnittscode angegebenen Steuerdaten aufgeführt.

Die Orts-, Bereichs- und Abschnittslisten können auch ggf. weitere Spalten enthalten, um zu bestimmten Eintragungen in den Listen 43 bis 46 dem jeweiligen Benutzer des RDS-TMC-Rundfunkempfängers weitere Meldungen zu liefern. Der Ortscode, Bereichscode und Abschnittscode sind, wie oben schon erwähnt, spezielle Namen für jeweils eine codierte Infomation.

Um im RDS-TMC-Rundfunkempfänger eine komplette, für die Sprachsyntheseschaltung 14 oder die Anzeigevorrichtung 13 verarbeitbare Meldung zu bilden, ist in dem Speicher 12 eine weitere Liste mit Standardphrasen abgelegt. Der Speicher 12 enthält somit ereignisspezifische Steuerdaten (in einer Standardphrasenliste) und verkehrsspezifische Steuerdaten (zusätzliche Ersetzungsliste). Mit einer solchen Standardphrasenliste könnten beispielsweise folgende Meldungen in Rechtschrift in der Steuerschaltung 7 generiert werden:

| | |
|---|---|
| 1 | Im Bereich Teutoburger Wald: Nebel |
| 2 | Im Stadtgebiet Dresden: Sportveranstaltung. |
| 3 | A2, Dortmund Richtung Hannover, zwischen Rehren und Lauenau: 4 km Stau. |
| 4 | A4 Kölner Ring, Aachen Richtung Olpe, Autobahnkreuz Köln-Ost: Ausfahrt gesperrt. |
| 5 | A3, Köln Oberhausen, zwischen Anschlußstelle Köln-Dellbrück und Anschlußstelle Köln-Mühlheim: zähfließender Verkehr |

Die Meldung Nr. 5 könnte beispielsweise in folgender codierter Form vom RDS-TMC-Rundfunkempfänger empfangen worden sein:
P1{5024, 3783, 3796}, P2

Die Meldung besteht aus zwei Standardphrasen P1 und P2. In die Standardphrase P1 müssen die unter den Codes (Adressen bzw. Argumente von P1) "5024", "3783" und "3796" abgelegten Bezeichnungen oder Namensbestandteile von der Chipkarte 17 gelesen werden. Beispielsweise ist der Code "5024" in der Abschnittsliste zu finden. Unter dem Abschnittscode "5024" ist in Rechtschrift "A3, Köln, Oberhausen" eingetragen. Die beiden anderen Argumente oder Codes von P1 sind z.B. in einer Ortsliste zu finden. Unter dem Ortscode "3783" ist in Rechtschrift "Köln-Dellbrück" und unter dem Ortscode "3796" ist in Rechtschrift "Köln-Mühlheim" eingetragen. Werden anstelle der Codes die entsprechenden Bezeichnungen in Rechtschrift in die Standardphrase P1 eingesetzt, so ergibt sich:
P1{(A3, Köln, Oberhausen), Anschlußstelle Köln-Dellbrück, Anschlußstelle Köln-Mühlheim} + P2

Der genaue Wortlaut in Rechtschrift für die Standardphrase P1 bzw. P2 wird aus der Standardphrasenliste entnommen und lautet:
P1 = < Straßennummer > , < Knotenpunkt > Richtung < Knotenpunkt > , zwischen < Ortsname > und < Ortsname >:
P2 = zähfließender Verkehr

In den spitzen Klammern stehen Variablen, die durch die oben angegebenen Namen in Rechtschrift (z.B. A3) ersetzt werden müssen.

Die in der Steuerschaltung 7 durchgeführten Maßnahmen zur Zusammensetzung einer für eine auf der Anzeigevorrichtung 13 darzustellende Meldung, wird auf ähnliche Weise auch für die Zusammenstellung der Lautschrift durchgeführt, die an die Sprachsyntheseschaltung 14 geliefert wird.

Der oben dargestellte RDS-TMC-Rundfunkempänger und die Chipkarte 17 sind für einen Benutzer geeignet, dem die Verkehrsnachrichten in deutscher Sprache mittels der Anzeigevorrichtung 13 und/oder der Sprachsyntheseschaltung 14 mitgeteilt werden. Ein solcher RDS-TMC-Rundfunkempfänger und auch die Chipkarte 17 können auch für andere Sprachen eingerichtet werden. In diesem Fall kann in dem Speicher 12 und in dem Daten-ROM 28 der Chipkarte 17 die entsprechende Rechtschrift und/oder Lautschrift dieser Sprache abgelegt sein.

Weiter besteht die Möglichkeit den RDS-TMC-Rundfunkempfänger und die Chipkarte 17 für mehrere Sprachen zu verwenden. Um den Aufwand jedoch klein zu halten sollte jeweils ein Rundfunkempfänger für eine spezielle Sprache (sprachenspezifisch) eingerichtet sein. In dem Speicher 12 ist daher nur eine Recht- und/oder Lautschrift für eine Sprache (z.B. deutsch) gespeichert. Im Gegensatz dazu ist eine Chipkarte 17 regionalspezifisch eingerichtet. In deren Daten-ROM 28 sind regionalspezifische Daten mehrerer Sprachen gespeichert. Wenn beispielsweise die Sprachen deutsch, englisch, französisch und niederländisch benutzbar sein sollen, so werden die im Daten-ROM 28 der Chipkarte 17 abgelegten Listen erweitert. Beispielsweise enthält die Ersetzungsliste 46 unter dem Ersetzungscode "2429" folgenden Eintrag:

| EC | RSd | LSd | LSe | LSf | LSn |
|---|---|---|---|---|---|
| 2429 | Köln | "k9ln | ¶$k@"l@Un (Cologne) | ¶$ko"lOj (Cologne) | ¶kui$l@n (Keulen) |

Für den Ort "Köln" ist in der Ersetzungsliste 46 unter dem Ersetzungscode (EC) "2429" die deutsche Rechtschrift (RSd) und Lautschrift (LSd) und die englische (LSe), die französische (LSf) und die niederländische Lautschrift (LSn) vorhanden. Gegebenenfalls können auch Einträge für die Rechtschrift der nichtdeutschen Sprachen gespeichert sein. Die Rechtschriften der nichtdeutschen Sprachen sind in Klammern gesetzt unterhalb der jeweiligen Lautschrift aufgeführt. Die Lautschriften der nichtdeutschen Sprachen stellen weitere erste Nebenkomponenten der Steuerdaten dar, die unter dem Ersetzungscode "2429" abgelegt sind. Für die nichtdeutschen Sprachen ist des weiteren vor jeder Lautschrift ein erstes Trennzeichen (¶) gesetzt. Diese ersten Trennzeichen geben an, daß in einer vorgegebenen Reihenfolge (Standardreihenfolge) die nichtdeutschen Sprachen in der Liste eingetragen sind. Die Reihenfolge der Listeneinträge für die verschiedenen Sprachen sind also festgelegt. Eine Standardreihenfolge liegt auch vor, wenn Sprachen am Ende der Reihenfolge weggelassen worden sind (z.B. niederländisch).

Falls es für eine bestimmte Bezeichnung keine Abweichung von der deutschen Lautschrift in einer anderen Sprache gibt, ist in der Liste ein entsprechender Eintrag nicht vorhanden. Beispielsweise sei vorausgesetzt, daß die Lautschrift für den Ort "Köln" in der französischen Sprache identisch mit der Lautschrift der deutschen Sprache ist. In diesem Fall ist in der Ersetzungsliste 46 kein Eintrag für die französische Sprache enthalten. Die jeweiligen nichtdeutschen Sprachen müssen dann für den Ort "Köln" in der Liste gekennzeichnet werden. Für die Kennzeichnung der englischen Lautschrift wird vor den Lautschrifteintrag ein zweites Trennzeichen "‡" mit einem weiteren sprachspezifischen Zeichen (e) ergänzt. Bei der niederländischen Sprache wird "‡n" eingesetzt. Das zweite Trennzeichen "‡" wird also durch das sprachspezifische Zeichen "n" ergänzt. Der Eintrag für den Ort "Köln" hätte in diesem angenommenen Fall folgendes Aussehen:

| EC | RSd | LSd | LSe | LSn |
|---|---|---|---|---|
| 2429 | Köln | "k9ln | ‡e$k@"l@Un | ‡n"kui$l@n |

In der oben angegebenen beispielhaften Ortsliste 43 ist der Ort "Lauf" unter dem Ortscode "3109" aufgeführt. Zu diesem Ort gibt es weder eine englische noch eine französische noch eine entsprechende niederländische Recht- und Lautschrift. Falls in der englischen, der französischen und der niederländischen Sprache eine Bezeichnung (z.b. der Ort "Lauf") wie in der deutschen Sprache geschrieben und ausgesprochen wird, ist auch kein weiterer Eintrag in der Recht- und Lautschrift vorhanden.

Bei einer Kombination wenigstens einer Bezeichnung mit unterschiedlichen Lautschriften und wenigstens einer Bezeichnung mit gleicher Lautschrift in den verschiedenen Sprachen ist die Bezeichnung mit unterschiedlicher Lautschrift in der Ersetzungsliste 46 eingetragen und die entsprechende Tabelle enthält für diese Bezeichnung den Ersetzungscode. Beispielsweise sei in der Ortsliste 43 unter dem Ortscode "3886" der Ort "Köln-Mühlheim" eingetragen. Für "Köln" ist in der Ortsliste 43 auf den Ersetzungscode "2429" verwiesen. Die Bezeichnung "Mühlheim" wird in allen angegeben Sprachen gleich ausgesprochen. Somit hat der entsprechende Eintrag in einer Ortsliste 43 folgendes Aussehen:

| | | |
|---|---|---|
| 3886 | 2429-Mühlheim | ○ "my:l$halm |

Für die Bezeichnung "Köln" ist für die nichtdeutschen Sprachen trotz unterschiedlicher Lautschrift kein Eintrag in der Ortsliste 43 notwendig, da diese schon in der Ersetzungsliste 46 vorhanden sind.

Es sind also in der Ortsliste 43, der Bereichsliste 44, der Abschnittsliste 45 und der Ersetzungsliste 46 jeweils nichtdeutsche Lautschriften enthalten, falls diese von der deutschen Sprache abweichen. Des weiteren sind in der Standardphrasenliste z.B. Einträge in englisch, französisch und niederländisch enthalten. Für die deutsche Standardphrase
" < Straßennummer > , < Ortsname > , 10 Kilometer Stau"
existiert ein entsprechender französischer Eintrag:
"Sur l'autoroute < Straßenname > à la hauteur de < Ortsname > , bouchon sur 10 kilomètres".

Für Straßenname und Ortsname müssen in der Steuerschaltung 7 noch der entsprechende Straßenname (z.B. "A4") und der entsprechende Ortsname (z.B. "Köln") eingesetzt werden.

Bei der Zusammensetzung dieser Meldung in der Steuerschaltung 7 werden zuerst die entsprechendenden Steuerdaten mit aus der Standardphrasenliste entnommen. Wenn in dem Speicher 12 nur französische Einträge abgelegt sind (Rundfunkempfänger für die französische Sprache), enthalten die Steuerdaten nur Einträge für die französische Sprache und es muß keine Selektierung in den Steuerdaten durchgeführt werden. Enthält der Speicher 12 jedoch Einträge für die französische und deutsche Sprache und ist die deutsche Sprache als erste Sprache festgelegt, wird nach Empfang der Steuerdaten aus der Standardphrasenliste eine Selektierung z.B. des französischen Lautschrifteintrages vorgenommen.

Danach werden die französischen Lautschrifteinträge für die Straßenbezeichnung "A4" und den Ort "Köln" gesucht. Für den Ort "Köln" ist es dabei erforderlich, zuerst in die Ortsliste zu gehen, in der unter einem entsprechenden Orstcode (codierte Meldung) Steuerdaten eingetragen sind. Wenn die Ortsliste Einträge für die deutsche Sprache (als erste Sprache) enthält und Einträge für die englische, französische und niederländische Sprache enthalten kann, wird nach Empfang der Steuerdaten aus der Ortsliste in der Steuerschaltung 7 der entsprechende französische Eintrag gesucht. Dieser existiert nicht, da in der ersten Hauptkomponente der deutschen Sprache (deutsche Rechtschrift) nur ein Ersetzungscode eingetragen ist. Die deutsche Lautschrift kann weggelassen sein oder einen Platzhalter aufweisen. Die Steuerschaltung 7 entnimmt anschließend aus der Ersetzungsliste 46, die im Daten-ROM 28 der Chipkarte 17 abgelegt ist, die Steuerdaten des entsprechenden Ersetzungscodes. Aus den empfangenen Steuerdaten wird der französische Lautschrifteintrag für den Ort "Köln" entnommen und in die Standardphrase eingefügt. Der gleiche Vorgang wird bei der Entnahme des französischen Lautschrifteintrages für die Straßenbezeichnung "A4" von der Steuerschaltung 7 durchgeführt.

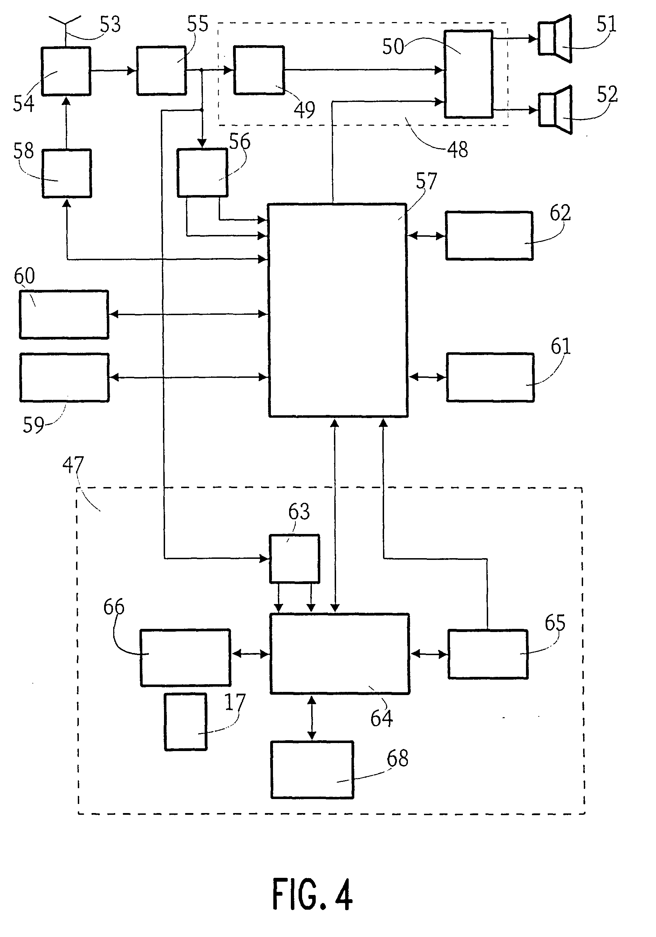

In Fig. 4 ist ein weiterer Rundfunkempfänger dargestellt, der mit einem RDS-TMC-Modul 47 über verschiedene Leitungen gekoppelt ist. Der Rundfunkempfänger enthält eine Audioschaltung 48 mit einem Stereodecoder 49 und einem Audioverstärker 50 und zwei Lautsprecher 51 und 52. Die Audioschaltung 48 empfängt ein von einer Antenne 53 empfangenes und über einen Tuner 54 und eine Zwischenfrequenzstufe 55 weitergegebenes Rundfunksignal. Im Stereodecoder 49 wird ein niederfrequentes Stereosignal gebildet, das über den Audioverstärker 50 den beiden Lautsprechern 51 und 52 zugeführt wird. Das Ausgangssignal der Zwischenfrequenzstufe 55 wird auch einem RDS-Decoder 56 und dem RDS-TMC-Modul 47 geliefert. Der RDS-Decoder 56 entnimmt aus dem von der Zwischenfrequenzstufe 55 gelieferten niederfrequenten Signal RDS-Daten. Die RDS-Daten und ferner ein Taktsignal werden vom RDS-Decoder 56 zu einer Radiokontrollschaltung 57 gegeben. Mittels der RDS-Daten und Daten, die von einer Bedienungsanordnung 59 geliefert werden, wird der Tuner 54 eingestellt. Hierzu werden einer den Tuner 54 steuernden Abstimmschaltung 58 von der Radiokontrollschaltung 57 die entsprechenden Daten geliefert.

Mit der Radiokontrollschaltung 57 sind noch ein Speicher 60, eine Anzeigevorrichtung 61 und gegebenenfalls eine oder mehrere weitere Anordnungen 62, beispielsweise ein Cassettenlaufwerk, ein CD-Laufwerk, ein Autotelefon usw., gekoppelt. Des weiteren ist über mehrere Leitungen die Radiokontrollschaltung 57 mit dem RDS-TMC-Modul 47 gekoppelt, welches einen RDS-Decoder 63, eine Steuerschaltung 64, eine Sprachsyntheseschaltung 65, eine Kartenlesevorrichtung 66 zur Aufnahme einer Chipkarte 67 und einen Speicher 68 enthält. Der RDS-Decoder 63 liefert die aus dem Ausgangssignal der Zwischenfrequenzstufe 55 entnommenen RDS- und TMC-Daten und ein Taktsignal an die Steuerschaltung 64. Die Steuerschaltung 64, die RDS-TMC-Daten wie die Steuerschaltung 7 aus Fig. 1 verarbeitet, liefert TMC-Daten an die Kartenlesevorrichtung 66 und bildet aus den von der Kartenlesevorrichtung 66 und weiteren von dem Speicher 68 empfangenen Daten (Daten in Rechtschrift und Lautschrift) Steuerdaten, die an die Sprachsyntheseschaltung 65 geliefert wird. Die Sprachsyntheseschaltung 65 erzeugt aus den Steuerdaten synthetisierte Sprache, die über die Radiokontrollschaltung 57 dem Audioverstärker 50 geliefert wird. Des weiteren bildet die Steuerschaltung 64 gegebenfalls aus den Steuerdaten eine Verkehrsmeldung in Rechtschrift, die über die Radiokontrollschaltung 57 der Anzeigevorrichtung 61 zugeführt wird.

## Patentansprüche

1. Rundfunkempfänger mit wenigstens einer Speicheranordnung (12, 28), die zu codierten Meldungen zugeordnete Steuerdaten enthält und mit einer Steuerschaltung (7), die dazu eingerichtet ist,
- von einem empfangenen Rundfunksignal abgeleitete codierte Meldungen an wenigstens eine Speicheranordnung (12, 28) zu liefern,
- von aus den codierten Meldungen abgeleitete Steuerdaten wenigstens einer Speicheranordnung (12, 28) zu empfangen und
- aus den Steuerdaten Meldungen in eine für eine Anzeigevorrichtung (13) und/oder eine Sprachsyntheseschaltung (14) geeigneten Form zu bilden,
**dadurch gekennzeichnet,**
**daß** die in wenigstens einer Speicheranordnung (12, 28) unter einer codierten Meldung abgelegten Steuerdaten mindestens einen Eintrag einer Schreibweise einer ersten Sprache und weitere Einträge von Schreibweisen von vorgegebenen weiteren Sprachen enthalten, wenn diese von der ersten Sprache abweichen, und
**daß** die Einträge aller weiteren Sprachen jeweils ein erstes einleitendes Trennzeichen enthalten, wenn diese in einer Standardreihenfolge abgelegt sind, und sonst ein zweites einleitendes Trennzeichen und ein darauffolgendes die Sprache kennzeichnendes Zeichen enthalten.

2. Rundfunkempfänger nach Anspruch 1,
**dadurch gekennzeichnet,**
**daß** die wenigstens einer Speicheranordnung (12, 28) Steuerdaten enthält, die eine Bezeichnung oder eine einfach oder mehrfach codierte Bezeichnung darstellen,
**daß** eine einfach oder mehrfach codierte Bezeichnung als Ersetzungscode bezeichnet wird,
**daß** die in wenigstens einer Speicheranordnung (12, 28) unter einem Ersetzungscode abgelegten Steuerdaten mindestens einen Eintrag einer Schreibweise einer ersten Sprache und weitere Einträge von Schreibweisen von vorgegebenen weiteren Sprachen enthalten, wenn diese von der ersten Sprache abweichen,
die Einträge aller weiteren Sprachen jeweils ein einleitendes Trennzeichen enthalten und
**daß** die Steuerschaltung (7) dazu eingerichtet ist,
- nach Empfang von Steuerdaten mit wenigstens einer einfach codierten Bezeichnung einmal auf die Speicheranordnung (12, 28) zuzugreifen und
nach Empfang von Steuerdaten mit wenigstens einer mehrfach codierten Bezeichnung mehrfach auf die Speicheranordnung (12, 28) zuzugreifen.

3. Rundfunkempfänger nach Anspruch 2,
**dadurch gekennzeichnet, daß** die in wenigstens einer Speicheranordnung (12, 28) unter jeweils einer codierten Meldung oder einem Ersetzungscode abgelegten Steuerdaten die ableitbare Recht- und/oder Lautschrift von wenigstens einer ersten Sprache und nur dann die ableitbare Recht- und/oder Lautschrift wenigstens einer weiteren Sprache enthalten, wenn Recht- und/oder Lautschrift der weiteren Sprache von der ersten Sprache abweichen.

4. Rundfunkempfänger nach Anspruch 2 oder 3,
**dadurch gekennzeichnet,**
**daß** die wenigstens eine Speicheranordnung (12, 28) Speicherbereichen zugeordnete Listen (43, 44, 45) mit jeweils einer codierten Meldung zugeordneten spezifischen Steuerdaten und eine Ersetzungsliste (46) mit den Ersetzungscodes und den jeweils zugeordneten Steuerdaten enthält.

5. Rundfunkempfänger nach Anspruch 4,
**dadurch gekennzeichnet,**
**daß** die Steuerschaltung (7) dazu eingerichtet ist, zumindest regionalspezifische Steuerdaten von einer ersten Speicheranordnung (28) und ereignisspezifische Steuerdaten von einer zweiten Speicheranordnung (12) zu erhalten.

6. Rundfunkempfänger nach Anspruch 5,
**dadurch gekennzeichnet,**
**daß** zumindest die erste Speicheranordnung (28) eine Ersetzungsliste (46) enthält.

7. Rundfunkempfänger nach Anspruch 5 oder 6,
**dadurch gekennzeichnet,**
**daß** wenigstens die erste Speicheranordnung (28) Bestandteil einer Chipkarte (17) ist, die dazu eingerichtet ist, in eine Kartenlesevorrichtung (16) aufgenommen zu werden.

8. Rundfunkempfänger nach Anspruch 6 oder 7,
**dadurch gekennzeichnet,**
**daß** wenigstens die erste Speicheranordnung (28) Bestandteil einer Chipkarte (17) ist, die zur Aufnahme in eine Kartenlesevorrichtung (16) vorgesehen ist.

9. Modul (47) zur Verarbeitung von aus einem Rundfunksignal abgeleiteten codierten Meldungen mit wenigstens einer Speicheranordnung (68, 28), die zu codierten Meldungen zugeordnete Steuerdaten enthält und mit einer Steuerschaltung (64), die dazu eingerichtet ist,
- von aus dem empfangenen Rundfunksignal abgeleitete codierte Meldungen an wenigstens eine Speicheranordnung (68, 28) zu liefern,
- von aus den codierten Meldungen abgeleitete Steuerdaten wenigstens einer Speicheranordnung (68, 28) zu empfangen und
- aus den Steuerdaten Meldungen in eine für eine Anzeigevorrichtung (59) und/oder eine Sprachsyntheseschaltung (62) geeigneten Form zu bilden,
**dadurch gekennzeichnet,**
**daß** die in wenigstens einer Speicheranordnung (28, 68) unter einer codierten Meldung abgelegten Steuerdaten mindestens einen Eintrag einer Schreibweise einer ersten Sprache und weitere Einträge von Schreibweisen von vorgegebenen weiteren Sprachen enthalten, wenn diese von der ersten Sprache abweichen, und
**daß** die Einträge aller weiteren Sprachen jeweils ein erstes einleitendes Trennzeichen enthalten, wenn diese in einer Standardreihenfolge abgelegt sind, und sonst ein zweites einleitendes Trennzeichen und ein darauffolgendes die Sprache kennzeichnendes Zeichen enthalten.

10. Speicheranordnung (12, 28, 68) für einen Rundfunkempfänger oder für ein Modul (47) zur Verarbeitung von aus einem Rundfunksignal abgeleiteten codierten Meldungen, wobei die Speicheranordnung zu codierten Meldungen zugeordnete Steuerdaten enthält,
**dadurch gekennzeichnet,**
**daß** die in wenigstens einer Speicheranordnung (12, 28, 68) unter einer codierten Meldung abgelegten Steuerdaten mindestens einen Eintrag einer Schreibweise einer ersten Sprache und weitere Einträge von Schreibweisen von vorgegebenen weiteren Sprachen enthalten, wenn diese von der ersten Sprache abweichen, und
**daß** die Einträge aller weiteren Sprachen jeweils ein erstes einleitendes Trennzeichen enthalten, wenn diese in einer Standardreihenfolge abgelegt sind, und sonst ein zweites einleitendes Trennzeichen und ein darauffolgendes die Sprache kennzeichnendes Zeichen enthalten.

11. Chipkarte (17) zur Aufnahme in eine Kartenlesevorrichtung (16, 66) für einen Rundfunkempfänger oder für ein Modul (47) zur Verarbeitung von aus einem Rundfunksignal abgeleiteten codierten Meldungen mit einer Speicheranordnung (12, 28, 68), die zu codierten Meldungen zugeordnete Steuerdaten enthält,
**dadurch gekennzeichnet,**
**daß** die in wenigstens einer Speicheranordnung (12, 28, 68) unter einer codierten Meldung abgelegten Steuerdaten mindestens einen Eintrag einer Schreibweise einer ersten Sprache und weitere Einträge von Schreibweisen von vorgegebenen weiteren Sprachen enthalten, wenn diese von der ersten Sprache abweichen, und
**daß** die Einträge aller weiteren Sprachen jeweils ein erstes einleitendes Trennzeichen enthalten, wenn diese in einer Standardreihenfolge abgelegt sind, und sonst ein zweites einleitendes Trennzeichen und ein darauffolgendes die Sprache kennzeichnendes Zeichen enthalten.

## Claims

1. Broadcast radio receiver having at least one memory arrangement (12, 28) which contains, for coded announcements, associated control data and having a control circuit (7) which is set up
- to deliver coded announcements derived from a received broadcast radio signal to at least one memory arrangement (12, 28),
- to receive control data derived from the coded announcements from at least one memory arrangement (12, 28), and
- to form, from the control data, announcements in a form which is suitable for a display apparatus (13) and/or a voice synthesis circuit (14),
**characterized**
**in that** the control data stored in at least one memory arrangement (12, 28) under a coded announcement contain at least one entry for a spelling in a first language and further entries for spellings in prescribed further languages if the latter differ from the first language, and
**in that** the entries for all the other languages respectively contain a first introductory separating character if they are stored in a standard order, and otherwise contain a second introductory separating character and a subsequent character identifying the language.

2. Broadcast radio receiver according to Claim 1,
**characterized**
**in that** the at least one memory arrangement (12, 28) contains control data which represent a name or a name coded one or more times, in that a name coded one or more times is referred to as a substitute code, in that the control data stored in at least one memory arrangement (12, 28) under a substitute code contain at least one entry for a spelling in a first language and further entries for spellings in prescribed further languages if the latter differ from the first language, the entries for all the other languages respectively contain an introductory separating character, and in that the control circuit (7) is set up
- to access the memory arrangement (12, 28) once after reception of control data having at least one name coded once, and
- to access the memory arrangement (12, 28) a plurality of times after reception of control data having at least one name coded a plurality of times.

3. Broadcast radio receiver according to Claim 2,
**characterized**
**in that** the control data stored in at least one memory arrangement (12, 28) under a coded announcement or a substitute code, respectively, contain the derivable spelling and/or phonetic transcription for at least one first language and only contain the derivable spelling and/or phonetic transcription for at least one further language if the spelling and/or phonetic transcription for the further language differ from those for the first language.

4. Broadcast radio receiver according to Claim 2 or 3,
**characterized**
**in that** the at least one memory arrangement (12, 28) contains lists (43, 44, 45), associated with memory areas, containing specific control data associated with a respective coded announcement and contains a substitute list (46) containing the substitute codes and the respectively associated control data.

5. Broadcast radio receiver according to Claim 4,
**characterized**
**in that** the control circuit (7) is set up to obtain at least regionally specific control data from a first memory arrangement (28) and event-specific control data from a second memory arrangement (12).

6. Broadcast radio receiver according to Claim 5,
**characterized**
**in that** at least the first memory arrangement (28) contains a substitute list (46).

7. Broadcast radio receiver according to Claim 5 or 6,
**characterized**
**in that** at least the first memory arrangement (28) is part of a smart card (17) which is set up to be held in a card reader (16).

8. Broadcast radio receiver according to Claim 6 or 7,
**characterized**
**in that** at least the first memory arrangement (28) is part of a smart card (17) which is intended to be held in a card reader (16).

9. Module (47) for processing coded announcements derived from a broadcast radio signal, having at least one memory arrangement (68, 28) which contains, for coded announcements, associated control data and having a control circuit (64) which is set up
- to deliver coded announcements derived from the received broadcast radio signal to at least one memory arrangement (68, 28),
- to receive control data derived from the coded announcements from at least one memory arrangement (68, 28), and
- to form, from the control data, announcements in a form which is suitable for a display apparatus (59) and/or a voice synthesis circuit (62),
**characterized**
**in that** the control data stored in at least one memory arrangement (28, 68) under a coded announcement contain at least one entry for a spelling in a first language and further entries for spellings in prescribed further languages if the latter differ from the first language, and
**in that** the entries for all the other languages respectively contain a first introductory separating character if they are stored in a standard order, and otherwise contain a second introductory separating character and a subsequent character identifying the language.

10. Memory arrangement (12, 28, 68) for a broadcast radio receiver or for a module (47) for processing coded announcements derived from a broadcast radio signal, the memory arrangement containing, for coded announcements, associated control data,
**characterized**
**in that** the control data stored in at least one memory arrangement (12, 28, 68) under a coded announcement contain at least one entry for a spelling in a first language and further entries for spellings in prescribed further languages if the latter differ from the first language, and
**in that** the entries for all the other languages respectively contain a first introductory separating character if they are stored in a standard order, and otherwise contain a second introductory separating character and a subsequent character identifying the language.

11. Smart card (17) to be held in a card reader (16, 66) for a broadcast radio receiver or for a module (47) for processing coded announcements derived from a broadcast radio signal, having a memory arrangement (12, 28, 68) which contains, for coded announcements, associated control data,
**characterized**
**in that** the control data stored in at least one memory arrangement (12, 28, 68) under a coded announcement contain at least one entry for a spelling in a first language and further entries for spellings in prescribed further languages if the latter differ from the first language, and
**in that** the entries for all the other languages respectively contain a first introductory separating character if they are stored in a standard order, and otherwise contain a second introductory separating character and a subsequent character identifying the language.

## Revendications

1. Récepteur de radiodiffusion comportant au moins un dispositif de mémorisation (12, 28), qui renferme des données de commande correspondant à des messages codés, et un circuit de commande (7), prévu pour
- délivrer des messages codés, dérivés d'un signal de radiodiffusion capté, à au moins un dispositif de mémorisation (12, 28),
- recevoir des données de commande, dérivées des messages codés et venant d'au moins un dispositif de mémorisation (12, 28), et
- former, à partir des données de commande, des messages dans une forme appropriée pour un dispositif d'affichage (13) et/ou un circuit de synthèse de la parole (14),
**caractérisé par le fait**
**que** les données de commande, stockées sous un message codé dans au moins un dispositif de mémorisation (12, 28), renferment au moins une inscription dans un mode d'écriture d'une première langue et d'autres inscriptions dans des modes d'écritures d'autres langues prédéterminées, lorsque celles-ci diffèrent de celles de la première langue et
**que** les inscriptions dans toutes les autres langues comportent chacune un séparateur comme premier caractère, lorsque celles-ci sont stockées dans un ordre standard, sinon un deuxième séparateur comme second caractère, suivi d'un caractère, qui spécifie la langue.

2. Récepteur de radiodiffusion selon la revendication 1
**caractérisé par le fait**
**que** le au moins un dispositif de mémorisation (12, 28) renferme des données de commande qui représentent une dénomination ou une dénomination codée une ou plusieurs fois,
**que** la dénomination codée une ou plusieurs fois est appelée code de substitution,
**que** les données de commande, stockées dans au moins un dispositif de mémorisation (12, 28) sous un code de substitution, renferment au moins une inscription dans un mode d'écriture dans une première langue et d'autres inscriptions dans des modes d'écritures dans d'autres langues prédéterminées, lorsque celles-ci diffèrent de celles de la première langue,
**que** les inscriptions dans toutes les autres langues comportent chacune un séparateur comme premier caractère et
**que** le circuit de commande (7) est conçu
- pour interroger une fois le dispositif de mémorisation (12, 28) après avoir reçu des données de commande comportant au moins une dénomination codée une fois et
- pour interroger plusieurs fois le dispositif de mémorisation (12, 28) après avoir reçu des données de commande comportant au moins une dénomination codée plusieurs fois.

3. Récepteur de radiodiffusion selon la revendication 2
**caractérisé par le fait**
**que** les données de commande, stockées dans au moins un dispositif de mémorisation (12, 28) chacune sous un message codé ou sous un code de substitution, renferment l'écriture alphabétique et/ou l'écriture phonétique, qui peuvent en être dérivées, dans au moins une première langue et seulement l'écriture alphabétique et/ou l'écriture phonétique, qui peuvent en être dérivées, dans au moins une autre langue, lorsque l'écriture alphabétique et/ou l'écriture phonétique dans l'autre langue diffèrent de celles dans la première langue.

4. Récepteur de radiodiffusion selon la revendication 2 ou 3
**caractérisé par le fait**
**que** le au moins un dispositif de mémorisation (12, 28) renferme des listes (43, 44, 45), affectées à des zones de mémoire, comportant des données de commande spécifiques affectées chacune à un message codé, et une liste de substitutions (46), comportant des codes de substitution et les données de commande, qui leur sont respectivement affectées.

5. Récepteur de radiodiffusion selon la revendication 4
**caractérisé par le fait**
**que** le circuit de commande (7) est conçu pour recevoir au moins des données de commande spécifiques aux régions venant d'un premier dispositif de mémorisation (28) et des données de commande spécifiques à des événements venant d'un deuxième dispositif de mémorisation.

6. Récepteur de radiodiffusion selon la revendication 5
**caractérisé par le fait**
**que** au moins le premier dispositif de mémorisation (28) renferme une liste de substitutions (46).

7. Récepteur de radiodiffusion selon la revendication 5 ou 6
**caractérisé par le fait**
**que** au moins le premier dispositif de mémorisation (28) fait partie d'une carte à puce (17), qui est conçue pour être introduite dans un dispositif lecteur de cartes (16).

8. Récepteur de radiodiffusion selon la revendication 6 ou 7
**caractérisé par le fait**
**que** au moins le premier dispositif de mémorisation (28) fait partie d'une carte à puce (17), qui est prévue pour être introduite dans un dispositif lecteur de cartes (16).

9. Module (47), destiné au traitement de messages codés dérivés d'un signal de radiodiffusion et comportant au moins un dispositif de mémorisation (68, 28), qui renferme des données de commande correspondant à des messages codés, et un circuit de commande (64) conçu pour
- fournir, à au moins un dispositif de mémorisation (68, 28), des messages codés dérivés du signal de radiodiffusion capté,
- recevoir des données de commande, dérivées des messages codés et venant d'au moins un dispositif de mémorisation (68, 28), et
- former, à partir des données de commande, des messages dans une forme appropriée pour un dispositif d'affichage (59) et/ou un circuit de synthèse de la parole (62),
**caractérisé par le fait**
**que** les données de commande, stockées sous un message codé dans au moins un dispositif de mémorisation (28, 68), renferment au moins une inscription dans un mode d'écriture d'une première langue et d'autres inscriptions dans des modes d'écritures dans d'autres langues prédéterminées, lorsque celles-ci diffèrent de celles de la première langue et
**que** les inscriptions dans toutes les autres langues comportent chacune un séparateur comme premier caractère, lorsque celles-ci sont stockées dans un ordre standard, sinon un deuxième séparateur comme second caractère, suivi d'un caractère, qui spécifie la langue.

10. Dispositif de mémorisation (12, 28, 68), destiné à un récepteur de radiodiffusion ou à un module (47), prévus pour le traitement de messages codés dérivés d'un signal de radiodiffusion, le dispositif de mémorisation renfermant des données de commande correspondant aux messages codés,
**caractérisé par le fait**
**que** les données de commande, stockées sous un message codé dans au moins un dispositif de mémorisation (12, 28, 68), renferment au moins une inscription dans un mode d'écriture d'une première langue et d'autres inscriptions dans des modes d'écriture d'autres langues prédéterminées, lorsque celles-ci diffèrent de celles de la première langue et
**que** les inscriptions dans toutes les autres langues comportent chacune un séparateur comme premier caractère, lorsque celles-ci sont stockées dans un ordre standard, sinon un deuxième séparateur comme second caractère, suivi d'un caractère, qui spécifie la langue.

11. Carte à puce (17) destinée à être introduite dans un dispositif lecteur de cartes (16, 66) pour un récepteur de radiodiffusion ou pour un module, prévus pour le traitement de messages codés dérivés d'un signal de radiodiffusion, comportant au moins un dispositif de mémorisation (12, 28, 68), qui renferme des données de commande correspondant à des messages codés,
**caractérisée par le fait**
**que** les données de commande, stockées sous un message codé dans au moins un dispositif de mémorisation (12, 28, 68), renferment au moins une inscription dans un mode d'écriture d'une première langue et d'autres inscriptions dans des modes d'écriture d'autres langues prédéterminées, lorsque celles-ci diffèrent de celles de la première langue et
**que** les inscriptions dans toutes les autres langues comportent chacune un séparateur comme premier caractère, lorsque celles-ci sont stockées dans un ordre standard, sinon un deuxième séparateur comme second caractère, suivi d'un caractère, qui spécifie la langue.
